# EUROPEAN PATENT APPLICATION

(11) **EP 1 384 768 A1**
(43) Date of publication of application: **28.01.2004**
(21) Application number: 02016728.4
(22) Date of filing: 26.07.2002
(51) Int. Cl.: C09J 153/02, C08L 53/02

(54) **Solvent-free hot melt adhesive, its use in bonding a polar leather layer to a non-polar substrate, and leather articles so produced**

(71) Applicant: KRATON Polymers Research B.V., 1031 CM Amsterdam (NL)
(72) Inventor: Maes, Caroline Rita Nicole, 1348 Ottignies-LLN (BE); Verheyden, Eddy, 1348 Ottignies-LLN (BE); Vosters, Philippe, 1348 Ottignies-LLN (BE); Muyldermans, Xavier, 1348 Ottignies-LLN (BE)
(74) Representative: Kortekaas, Marcellinus C. J. A.

(57) **Abstract**

A solvent free, hot melt adhesive composition to be used for bonding a polar leather layer to a non-polar substrate, comprising:
(a) a block copolymer, comprising at least one acid functionalized, selectively hydrogenated inner block predominantly derived from a conjugated diene which block has been functionalized by acid grafting, and at least two terminal blocks, predominantly derived from a vinylarene;
(b) a hydrogenated hydrocarbon tackifying resin, with a softening point lower than 140°C. in a weight proportion of 30 to 150 PHR (parts by weight of tackifying resin per 100 parts per weight of block copolymer);
(c) a resin which is compatible with the predominantly poly(vinylarene) blocks, having a softening point lower than 140°C in a weight proportion of from 10 to 80 PHR;
(d) optionally a melt flow improving poly(alkylene) resin, which has been functionalized, in a weight proportion of from 0 to 30 parts PHR, and
(e) stabilizers and/or additional auxiliaries in a weight proportion of from 0.1 to 1 PHR,
as well as its use for bonding a polar leather layer to a non-polar substrate and formed leather articles composed by means of said adhesive composition.

## Description

### FIELD OF THE INVENTION

The present invention relates to a solvent-free hot melt adhesive composition for bonding a polar leather layer to a non-polar substrate, its use, a process of bonding a polar leather layer to a non-polar substrate using the solvent-free, hot melt composition and to composed leather articles, wherein the polar leather and non-polar substrate have been bonded by the solvent-free hot melt adhesive composition.

More in particular the invention relates to a solvent-free, hot melt adhesive composition for bonding footwear components, comprising at least one polar leather layer and at least one non-polar substrate, its use, the process of bonding footwear components, using the solvent-free hot melt adhesive composition, and to footwear, composed of a polar leather component and an non-polar substrate component that have been bonded by the solvent-free hot melt adhesive composition.

### BACKGROUND OF THE INVENTION

Adhesive compositions for bonding footwear are known. Such compositions were up to now comprising significant amounts of organic solvents. Due to the still increasing pressure from health, safety and environmental authorities said organic solvents have to be eliminated. Unfortunately alternative adhesive compositions which are suitable for bonding highly non-polar footwear components, such as synthetic polymeric shoe soles to polar components such as leather uppers, are limited. In addition, the conventional bonding technology requires a pre-treatment of the surface of the non-polar substrates to be bonded with a primer, in order to reach an adequate bonding. This is particularly essential when using highly non-polar synthetic footwear components, made from e.g. polyolefins or styrenic block copolymers and in particular hydrogenated styrenic block copolymers e.g. KRATON® G-2705 block copolymer compositions.

More in particular, from EP-0822244A1, a process was known for bonding footwear parts by hot application of adhesives on uppers, innersoles or soles of hot melt adhesives comprising:
(I) from 9.5 to 99.5 wt % of a heterophasic composition comprising:
   (A) from 20 to 60 wt% of a homopolymer of propylene, or one or more crystalline copolymers of propylene, or mixtures of the above mentioned (co)polymers;
   (B) from 0 to 25 wt% of an ethylene copolymer insoluble in xylene at ambient temperature (about 25°C);
   (C) from 15 to 80 wt% of an olefin copolymer fraction, soluble in xylene at ambient temperature, and
(II) from 0.5 to 5 wt% of a polar monomer, grafted to the composition (I).

Said process was carried out by using automatic machines and comprised the following operating phases carried out either in sequence or simultaneously
(a) hot application of a low consistency layer (1) of an adhesive along the outer perimeter band of footwear uppers, innersoles or soles;
(b) hot application of a high consistency layer (2) of an adhesive along the concentric perimeter inner band, right inside the layer (1) of adhesive,
wherein the operating phases (a) and (b) were carried out in a sufficiently short time in order to ensure that neither layer (1) or (2) substantially began the cooling down process.

Said process and said adhesive composition were not acceptable because the bonded components have appeared to be far too stiff to withstand repeated flexing of the shoes composed, to break upon bending and to show a limited service temperature range, hence fail to ensure long lasting, durable joints. Moreover, its high melt viscosity required too high application temperatures which exceed 260°C. In addition said process has appeared to be rather vulnerable for operational failures or breakdowns, resulting in significant losses of products out of specification and scrap and as a consequence increased costs.

It will be appreciated that there is still a strong need for improved solvent-free adhesive compositions for bonding a polar leather layer to a non-polar substrate layer, which show a combination of excellent bonding properties and more reliable applicability and processability and lower operational costs, e.g. by operating at lower processing temperatures or in an one step process, enabling shorter cycle times. Moreover, the required good bonding between the components must be maintained for a sufficient long time, i.e. sufficiently lifetime of the produced shoes, leather suitcases, composed leather sporting articles such as golf bags and horse saddles, fashion articles (belts, handbags, briefcases). An object of the present invention is therefore to provide said solvent-free adhesive composition aimed at. Another object of the present invention is to provide a process for the manufacturing of composed products, comprising a polar leather component bonded to a non-polar synthetic or polymeric substrate component, and using said solvent-free adhesive composition.

As result of extensive research and experimentation, said adhesive composition aimed at and the process using it, have now surprisingly been found.

### SUMMARY OF THE INVENTION

Accordingly the invention relates to a solvent-free, hot melt adhesive composition to be used for bonding a polar leather layer to a non-polar substrate, comprising:
(a) a block copolymer, comprising at least one acid functionalized, selectively hydrogenated inner block predominantly derived from a conjugated diene which block has been functionalized by acid grafting, and at least two terminal blocks, predominantly derived from a vinylarene;
(b) a hydrogenated hydrocarbon tackifying resin, with a softening point lower than 140°C. preferably lower than 100°C and more preferably lower than 90°C, in a weight proportion of 30 to 150 PHR (parts by weight per 100 parts per weight of block copolymer) and preferably from 50 to 120 PHR;
(c) a resin which is compatible with the predominantly poly(vinylarene) blocks, having a softening point lower than 140°C and preferably lower than 110°C, in a weight proportion of from 10 to 80 PHR and preferably from 20 to 60 PHR;
(d) optionally a melt flow improving poly(alkylene) resin, which has been functionalized, in a weight proportion of from 0 to 30 PHR, and preferably from 5 to 20 PHR; and
(e) stabilizers and/or additional auxiliaries in a weight proportion of from 0.1 to 1 PHR.

### DETAILED DESCRIPTION OF THE INVENTION

Examples of non-polar substrates are compositions comprising inter alia: vinylarene/conjugated diene block copolymers such as KRATON® D copolymers; hydrogenated vinylarene/conjugated diene block copolymers such as KRATON® G copolymers; vinylarene/conjugated diene random copolymers; natural rubbers, poly(vinylarene); polyolefin; EVA copolymer; and/or mixtures thereof; to which optionally oils and other auxiliaries have been added.

As component (a) of the composition of the present invention can be used in principle block copolymers ABA, ABABA, ABA', ABA'BA, A'BABA' or radical block copolymers (AB)nX, wherein the blocks A and A' represent a poly(vinylarene) block, wherein block(s) B represent a selectively hydrogenated poly(conjugated diene) block, which has been functionalized, wherein n is in the range of from 3 to 6, and X is the residue of a coupling agent.

Said functionalization is preferably performed by grafting with an ethylenically unsaturated mono carboxylic acid or di carboxylic acid, such as acrylic acid, methacrylic acid, maleic acid or maleic anhydride. Preferably the hydrogenated copolymer is grafted with maleic anhydride to give from 1 to 10 wt% bound graft, preferably from 1 to 5 wt% and more preferably from 1 to 3 wt%.

With the term predominantly as used throughout the specification, is meant that the block copolymers A and A' may comprise in addition to the main vinylarene monomer units minor amounts of structurally related or non related comonomers such as other styrene derivatives or conjugated diene in amounts of less than 20 wt% and preferably less than 10 wt%, relative to the weight of the complete (co)polymer block and in analogy that the blocks B may comprise in addition to the main conjugated diene monomer units, the same minor amounts of structurally related or non related comonomers such as other conjugated diene or vinylarene comonomers.

Preferred block copolymers to be used as component (a) are ABA' triblock copolymers comprising an elastomeric block portion B and a thermoplastic block portions A and A' which may be the same or different. The thermoplastic, hard blocks A and A' are derived from monomers such as styrene, alpha-methyl styrene, other styrene derivatives such as ortho, meta and para methyl styrene, o-, m-, p-ethyl styrene, o-, m-, p-methoxy styrene, o-, m-, p-isopropyl styrene, p-tert butyl styrene or mixtures thereof. More preferably said thermoplastic hard blocks A and A' are composed of styrene, optionally mixed with minor amounts of alpha-methyl styrene or paramethyl styrene (amounts of at most 15 wt%, relative to the weight of the block(s) A and A', and has a number average molecular weight of from 4000 to 20.000, preferably from 5000 to 10.000 and most preferably from 6.000 to 9.000. Typically the hard block portions A comprise from 20 to 50 % and more preferably from 25 to 40 % of the total weight of the block copolymer.

The B block(s) have to be regarded as a soft block, which is derived from conjugated diene monomers of from 4 to 6 carbon atoms or linear alkene monomers of from 2 to 6 carbon atoms. Suitable diene monomers include 1,2-butadiene, 2-methyl-1,3-butadiene, 2-methyl-1,3-pentadiene, 1,3-octadiene, 1,3-pentadiene and the like. Suitable alkene monomers include ethylene, propylene, butylenes and the like. The soft block portion B preferably comprises a substantially amorphous polyolefin such as ethylene/propylene polymers, ethylene/butylenes polymers, polybutadiene, polyisoprene or mixtures thereof. Preferably the soft block(s) B have been derived from butadiene or isoprene and have been selectively hydrogenated in the initially prepared complete block copolymer. This means that the blocks B have been hydrogenated for more than 90 % of the originally present ethylenical unsaturation, whereas the aromatic unsaturation has remained intact for more than 90 %.

In the preferred hydrogenated poly(butadiene) blocks, the proportion of 1,2 polymerized butadiene units (vinyl content) is in the range of from 30 to 80 % and more preferably from 35 to 70 %. The number average molecular weight of the soft block(s) B is typically from 10.000 to 90.000 and preferably from 20.000 to 60.000. Typically the soft block(s) B portion comprises from 20 to 80 % by weight and preferably from 40 to 70 wt%, relative to the weight of the total weight of the block copolymer.

A most preferred block copolymer to be used as component
(a) of the adhesive composition of the present invention is the commercially available KRATON® FG 1901 block copolymer, a selectively hydrogenated styrene-butadiene-styrene block copolymer having a styrene content of about 30 wt% and end blocks of about 7300 molecular weight, which selectively hydrogenated poly(butadiene) polymer block is grafted with maleic anhydride to give 1.5-2 wt% bound graft and the initial poly(butadiene) block has a vinyl content of about 40%.

The component (b) is actually blended with the block copolymer component (a) to provide tack. Examples of hydrogenated hydrocarbon tackifying resins which may be suitable applied in the adhesive compositions of the present invention are hydrogenated rosin esters, and more in particular the glycerol ester of hydrogenated rosin or pentaerythritol ester of hydrogenated rosin (e.g. FORAL™ 85E, FORALYNE™ 85E, or FORAL™ 105) or hydrogenated hydrocarbon resins (e.g., such as REGALITE™ R resins or ARKON M resins or ESCOREZ™ 5000 series or STABILITE™ resins). Preferably diglycerol ester of highly hydrogenated resin (FORAL™ 85-E) is used as component (b) and more preferably in an amount of from 70 to 100 PHR.

As resin, which is compatible with resinous terminal block portions of the block copolymer (component c), an aromatic hydrocarbon resin can be used. Useful resins include coumarone-indene resins, poly(alpha-methyl styrene) resins, poly styrene resins or vinyl toluene-(alpha-methyl styrene) copolymers. Examples of aromatic hydrocarbon resins useful in the adhesive composition of the present invention are AMOCO 18 series resins, KRISTALEX™ series resins (e.g. KRISTALEX™ F100 or 3115), which are composed of alpha-methyl styrene (EASTMAN), PICCOTEX™ series resins which are composed of alpha-methyl styrene and vinyl toluene (EASTMAN), NEVCHEM™ (NEVILLE) and PICCO™ 6000 (EASTMAN) series resins which are composed of aromatic hydrocarbons, CUNAR™ series resins, e.g. CUMAR™ LX509 (NEVILLE) which are composed of coumarone-indene resins, HERCURES™ A101 resin (aromatic resin derived from aromatic petroleum (EASTMAN). As preferred resin component (c) HERCURES™ A101 resin or KRISTALEX™ F100 resin are used.

As optional component (d) can be used homopolymers of propylene or one or more crystalline copolymers of propylene, which contain 50 wt% or more propylene (e.g. ADFLEX™ copolymers, i.e. copolymers made of propylene and a further olefin by the CATALLOY™ process), or mixtures of the hereinbefore mentioned (co)polymers, which have been acid grafted and preferably with maleic acid or maleic anhydride. In preferred solvent free, hot melt adhesive compositions said propylene (co)polymer is included more preferably in amounts of 5 to 20 parts by weight per 100 parts by weight of block copolymer. Preferred propylene copolymers which are applied are PP QESTRON™ KA 802A, PP QESTRON™ 805A, which are maleic anhydride grafted heterophasic PP copolymers of BASELL.

As component (e) can be used stabilizers which are known from e.g. US Pat No 4,835,200. More in particular phenolic antioxidant (IRGANOX™), benzotriazole ultraviolet inhibitor (TINUVIN™ P) and a hindered amine ultraviolet inhibitor (TINUVIN™ 770) can be used to stabilize the formulation against degradation. Particularly preferred are hindered phenols and more preferred less volatile hindered phenols such as tetrakis [methylene 3,5-di-tert-butyl-4-hydroxy hydro cinnamate)] methane (IRGANOX™ 1010 antioxidant) or 2(3,5-di-tert-butyl-4-hydroxy) 4,6-bis (N octylthio) 1,3,3-triazine (IRGANOX™ 565 antioxidant). TINUVIN™ P and IRGANOX™ 1010 are known to show synergistic effect in polymer stabilization.

It will be appreciated that the solvent-free, hot melt adhesive composition provide excellent bonding when applied at 230 to 260°C and satisfactory adhesion at 200°C, especially when using preheated polymer substrates. Moreover the bonded polar leather - non-polar synthetic material composites do not show any break upon repeatedly bending contrary to the composites made by using prior hot melt adhesive compositions. Therefore the adhesive compositions of the present invention have been found to provide attractive flexing endurance or resistance to flexing to footwear.

It will be appreciated that another aspect of the present invention is formed by the use of hereinbefore specified solvent-free, hot melt adhesive compositions for bonding a polar leather layer to a non-polar substrate. In particular said use relates to the bonding of shoe components and components of other formed leather articles such as suitcases, sporting articles and fashion articles, formed from a leather component and a synthetic polymeric non-polar component. More in particular said use relates to the bonding of shoe uppers and soles. In a more preferred use the shoe uppers are made of leather and the shoe soles are made of a non-polar polymeric material.

According to a more preferred embodiment of said use, the shoe soles (or midsoles) are made from vinylarene/conjugated diene block copolymers; hydrogenated vinylarene/conjugated diene block copolymers; vinylarene/conjugated diene random copolymers; natural rubbers, poly(vinylarene); polyolefin; EVA copolymer; and/or mixtures thereof; to which optionally oils and other auxiliaries have been added.

Moreover the present invention is also relating to a process for bonding a polar leather layer to a non-polar synthetic polymeric layer, and more preferably shoe components, by the use of the hereinbefore specified adhesive compositions of the invention. Such process may, and preferably is automated.

It will be appreciated that another aspect of the present invention is formed by the composed formed articles, such as shoes, handbags suitcases, derived from a polar leather component and a non-polar synthetic component, which have been bonded to each other with a hereinbefore defined adhesive composition.

The invention is further illustrated by the following examples, however without restricting its scope to these specific embodiments.

### Example 1

Non-polar compounds were used, composed of a linear triblock SEBS-type copolymer, a polypropylene homopolymer, a paraffinic extender oil, and an antioxidant. The triblock copolymer was based on styrene and ethylene/butylene having a bound styrene content of 33 wt% (KRATON® G 1651). The polypropylene homopolymer (PM 6100, BASELL) had a melt flow rate of 35 g/10 min (230°C/2.16 kg) and was used in a proportion of 34 PHR (parts by weight per 100 parts by weight of block copolymer). PRIMOL™ (EXXON) was used as paraffinic extender oil in a proportion of 100 PHR. As antioxidant IRGANOX™ 1010 antioxidant (pentaerythryl tetrakis 3-3,5-di-butyl-4-hydroxyphenylpropionate) and IRGANOX™ P5800 antioxidant (dilauryl thiodipropianate) were used in a proportion of 0.01 to 1 PHR. The non-polar compounds were bonded to leather uppers using several solvent-free, hot melt adhesive compositions according to the present invention which have been composed as listed in Table 1.

All solvent-free, hot melt adhesive compositions were prepared using a MARIS™ 30VI, 30 mm corotating twin screw extruder. The gravimetric feeders, one for the polymer and two for the resin, were equipped with a vibration tray. The processing of hot melts began with pre-blending the polymer, the polypropylene if any and antioxidant. The pre-blend was added to the extruder via the first feeding port. At the second and third feeding port, part of the resins (1/3 to ½ of the total amount of resin) was added.

The hot melt strand was cut on a GALA^{TM} granulator with a die plate temperature of 130°C and a speed of 1500 rpm and cooled by water.

The sole/upper bonding was tested by means of ROSSFLEX test bars (75 x 25 x 7 mm), which were injection molded on a 200 kW BATTENFELD^{TM} BA 200/50 CD molding machine and subsequently cut in two parts for use in the assembling lab test. Pre-buffed leather straps of similar dimension were used.

A hot melt dispenser, equipped with a 2 mm thick slit die (10 mm wide), was used to manually apply a hot melt layer onto non-primed compound test bars. The hot melt application temperatures varied from 260° to 200°C. The adhesive application and bonding operation (including the positioning of the test bar onto the leather strap and time till applying full pressure) was kept as short as possible to prevent the hot melt from cooling down and as such keep the hot melt viscosity as low as possible.

After hot melt application, the test bars and leather straps were immediately pressed for 15 seconds at 12 kg/cm². In order to fix the bonds well, it was necessary to apply pressure on the test assembly until the bond had built up sufficient strength to avoid separation upon removal from the press.

T-peel testing was carried out according to the SATRA AM1 180°C T-peel test after storing the samples to be tested for at least 24 hours in a standard controlled environment at 21°C and 65 % relative humidity. The Peel tests were carried out using the ZWICK™ tensile tester and at a rate of 100 mm/sec until a bond length of 30 mm had been peeled.

All results listed were obtained using a total of four test assemblies.

**Table 1**

| Adhesive formulation | | A | B | C | D |
|---|---|---|---|---|---|
| • KRATON FG-1901 | wt% | 52 | 56 | 45 | 38 |
| • FORALYNE 85E | wt% | 26 | 28 | 36 | 38 |
| • HERCURES A-101 | wt% | 13 | 14 | 18 | 19 |
| • PP QESTRON KA 802A | wt% | 7 | 0 | 0 | 0 |
| • PP QESTRON KA 805A | wt% | 0 | 0 | 0 | 5 |
| • IRGANOX 1010 | wt% | 2 | 2 | 1 | 1 |
| Peel load 230°C | N/mm | 7.7 | 7.5 | 7.1 | 3.9 |

### Example 2

The solvent-free hot melt adhesives according to the present invention outperformed solvent-based primer/PU adhesive or KRATON contact adhesive applied from solution.

The preparation of the test materials and testing was carried out in the same way as described in example 1. As non-polar compound, Compound 2 was used comprising KRATON^{TM} as SEBS-type polymer; PM 6100 as polypropylene homopolymer in a weight proportion of 100 PHR, PRIMOL^{TM} 352 oil in a weight proportion of 180 PHR. HALOSOL^{TM} is a solvent (ethyl acetate) based halogenation primer for promoting adhesion to thermoplastic elastomeric substrates (KOMMERLING/GmbH).

The results have been listed in Table 2.

**Table 2**

| Primer / Adhesive | Heat Activation Temp | Peel load |
|---|---|---|
| KRATON® FG-1901 contact adhesive from solution | 83°C | 0.2 N/mm |
| KRATON® FG-1901 contact adhesive from solution | 121°C | 0.6 N/mm |
| HALOSOL^{TM} 6* / PU adhesive | 83°C | 0.1 N/mm |
| Plasma treatment/HALOSOL™ 6 / PU adhesive | 83°C | 0.1 N/mm |
| Hot melt adhesive comp at 230°C | | 7.1 N/mm |

No adhesion developed when using traditional solvent based primer/PU adhesive system to bond a-polar olefinic substrates to leather.

### Example 3

Table 3 shows that adhesion/peel strength of KRATON FG-1901 based hot melt formations according to the present invention, compared to those obtained using the MONTELL reference adhesive composition at different application temperatures. Compound 1 is identical to the non-polar compound of Example 1. Compound 3 is composed of KRATON® D-4274 and KRATON® D-1101 in an 100:42 weight ratio (D-4274 is an oil extended branched block copolymer based on styrene and butadiene, with bound styrene in the neat polymer of 49 % mass, a hardness of 82 Shore A and a Melt Flow Ratio (200°C/5 kg) of 20 g/10 min; D-1101 is a clear linear block copolymer based on styrene and butadiene, with bound styrene of 31 % mass, a hardness of 72 Shore A and a Melt Flow Ratio (200°C/5 kg) < 1g/10 min); POLYSTYROL 473 D, an easy flowing high impact grade of polystyrene with a Melt Flow Ratio (200°C/5kg) of 12 g/min (BASF AG), in an amount of 20 PHR;

KD-28 as paraffinic extender oil (SHELL CHEMICALS LTD) in an amount of 0 to 25 PHR; IRGANOX™ 565, 2(3,5-di tet butyl-4-hydroxy) 4,6 bis (N-octylthio)1,3,5 triazine antioxidant, CIBA-GEIGY AG) in an amount of from 0.01 to 0.1 PHR.

The solvent-free hot melt compositions according to the present invention provide satisfactory adhesion, meeting the industry requirement and outperform the MONTELL (Montell Technology Company BV) hot melt adhesive composition according to EP-0822244A1, relating to the bond strengths and hot melt application temperature, when tested according to the preparation and testing in the same way as described in Example 1.

**Table 3**

| HOT MELT | CONDITION | Compound 1 | Compound 3 |
|---|---|---|---|
| Adhesive comp | | | |
| C | | 5.3 | n.d. |
| D | 260°C | n.d | n.d. |
| MONTELL* | | 4.6 | n.d. |
| C | | 7.1 | 4.3 |
| D | 230°C | 3.9 | 3.3 |
| MONTELL* | | 0.9 | 1.8 |
| C | | 8.4 | 7.1 |
| D | 200°C-preheating | 4.1 | 4.3 |
| MONTELL* | | failed | failed. |

| | | | |
|---|---|---|---|
| * hot melt adhesive composition according to EP-08222244A1 (Montell TECHNOLOGY Company BV) n.d. not determined, works well at 230°C. | | | |

As illustrated, 260°C seemed to be the minimum application temperature at which satisfactory non-polar styrenic block copolymer/leather bonds can be made, using the MONTELL hot melt, whereas at 230°C unacceptable poor adhesion (peel strengths < 1.5 N/mm was found, and at 200°C we even failed to apply a fine layer of the Montell hot melt onto the substrates to be joined. The hot melt adhesive formulations of the present invention provided adequate adhesion when applied at 260-230°C and satisfactory adhesion at 200°C, especially when using preheated polymer substrates.

### Example 4

Data below are about flexing endurance or resistance of the adhesive to repeated flexing of the footwear. Visual assessment of the bonds showed that non-polar SBC/leather assemblies using the MONTELL hot melt break upon bending whereas test assemblies made using the hot melt adhesive compositions of the present invention could be repeatedly bent without breaking. To quantify the resistance to repeated flexing, sole/upper test assemblies were freely bent over a rod of 90° angle up to 150 kc (kilocycles) using the Ross flex tester. To check validity of the test, a parallel test with a SBS/leather test assembly adhered using a solvent-based primer/PU adhesive, was carried out.

**Table 4**

| Hot Melt | Temp | Condition | Compound 1 | Compound 3 |
|---|---|---|---|---|
| C | 230°C | standard | 7.1 | 4.3 |
| C | 230°C | Rossflex 150 kc | 4.9 | 4.0 |
| | | | | |
| D | 230°C | standard | 3.9 | 3.3 |
| D | 230°C | Rossflex 150 kc | 4.4 | 3.3 |
| MONTELL* | 230°C | standard | 0.9 | 1.8 |
| MONTELL* | 230°C | Rossflex 150 kc | broken | broken |

| | | | | |
|---|---|---|---|---|
| * The MONTELL adhesive composition was according to EP-0822244A1. | | | | |

For the reference KRATON D/leather test assemblies, the initial peel strengths of 9 N/mm reduced to 6 N/mm upon flexing 150 kc. The MONTELL hot melt was broken after flexing 150 kc, whereas the hot melt adhesive composition of the invention lost somewhat in adhesion upon flexing but still promising adhesion was found.

### Examples 5 and 6

Adhesion may be often improved when the hot melt adhesive composition of the invention is applied on preheated (5) or mechanically roughed (6) non-polar substrates.

**Table 5**

| Material Polymer type Hardener | | | Compound 1 SEBS PP | Compound 3 SBS PS |
|---|---|---|---|---|
| Hot melt | Temp. °C | Condition | N/mm | N/mm |
| C | 200 | standard | 2.4 | 2.0 |
| C | 200 | preheating | 8.4 | 7.1 |

**Table 6**

| Material Polymer type Hardener | | | Compound 1 SEBS PP | Compound 3 SBS PS |
|---|---|---|---|---|
| Hot melt | Temp. °C | Condition | N/mm | N/mm |
| C | 230 | standard | 6.0 | 4.5 |
| C | 230 | Mech. Roughed substrates | 5.7 | 7.1 |
| D | 230 | standard | 4.1 | 4.6 |
| D | 230 | Mech. Roughed substrates | 4.8 | 4.6 |

### Example 7

The hot melt adhesives of the present invention could withstand sold and warm climate conditions. After accelerated heat and cold aging test, adhesion close to the requirement was found. This was not the case for the MONTELL hot melt since poor initial cold or heat aged values were seen (<2 N/mm).

**Table 7**

| Material | | | Compound 1 | Compound 3 |
|---|---|---|---|---|
| Polymer type | | | SEBS | SBS |
| Hardener | | | PP | PS |
| Hot melt | Temp. °C | Condition | N/mm | N/mm |
| C | 230 | standard | 7.1 | 4.3 |
| C | 230 | +50 °C/7 days | 4.4 | 4.2 |
| C | 230 | -20 °C/7 days | 4.4 | 5.5 |
| D | 230 | standard | 3.9 | 3.3 |
| D | 230 | +50 °C/7 days | 4.4 | 3.7 |
| D | 230 | -20 °C/7 days | 4.4 | 5.1 |
| MONTELL* | 230 | standard | 0.9 | 1.8 |
| MONTELL* | 230 | +50 °C/7 days | 1.0 | n.d. |
| MONTELL* | 230 | -20 °C/7 days | 0.9 | 1.5 |

| | | | | |
|---|---|---|---|---|
| * hot melt adhesive composition according to EP-0822244A1 (Montell Technology Company BV). | | | | |

### Example 8

The KRATON hot melt could also be used to bond a wider range of polyolefinic substrates to leather, including SBC compounds, as well as ENGAGE™ substrates (Compound 4) and cross linked EVA substrates (Compound 5).

**Table 8**

| Material | | | Compound 4 | Compound 5 |
|---|---|---|---|---|
| Hot melt | Temp. °C | Condition | N/mm | N/mm |
| C | 230 | Standard | 4.5 | 6.6 |
| C | 230 | +50 °C/7 days | 5.8 | n.d. |
| D | 230 | standard | 3.6 | 4.9 |
| D | 230 | +50 °C/7 days | 4.3 | n.d. |

## Claims

1. Solvent free, hot melt adhesive composition to be used for bonding a polar leather layer to a non-polar substrate, comprising:
(a) a block copolymer, comprising at least one acid functionalized, selectively hydrogenated inner block predominantly derived from a conjugated diene which block has been functionalized by acid grafting, and at least two terminal blocks, predominantly derived from a vinylarene;
(b) a hydrogenated hydrocarbon tackifying resin, with a softening point lower than 140°C. preferably lower than 100°C and more preferably lower than 90°C, in a weight proportion of 30 to 150 parts by weight of tackifying resin per 100 parts per weight of block copolymer and preferably from 50 to 120 parts by weight per 100 parts by weight of block copolymer;
(c) a resin which is compatible with the predominantly poly(vinylarene) blocks, having a softening point lower than 140°C and preferably lower than 110°C, in a weight proportion of from 10 to 80 parts by weight and preferably from 20 to 60 parts by weight of resin per 100 parts by weight of block copolymer;
(d) optionally a melt flow improving poly(alkylene) resin, which has been functionalized, in a weight proportion of from 0 to 30 parts by weight, and preferably from 5 to 20 parts by weight per 100 parts by weight of block copolymer, and
(e) stabilizers and/or additional auxiliaries in a weight proportion of from 0.1 to 1 part by weight per 100 parts by weight of block copolymer.

2. Solvent free, hot melt adhesive composition according to claim 1, wherein component (a) comprises a block copolymer A-B-A, wherein A represents a poly(vinyl) block and wherein B represents a selectively hydrogenated poly(conjugated diene) block, which has been grafted with an ethylenically unsaturated dicarboxylic acid.

3. Solvent free, hot melt adhesive composition according to claim 2, wherein the blocks A have a number average molecular weight in the range of from 5.000 to 10.000, the block B has a number average molecular weight in the range of from 20.000 to 60.000, derived from butadiene and which has a vinyl content of from 35 to 70 % and has been grafted with maleic anhydride to give 1 to 5 wt% bound maleic anhydride, relative to the weight of the total block copolymer.

4. Solvent free, hot melt adhesive composition according to claim 3, wherein the weight proportion of the bound grafted maleic anhydride is from 1 to 3 %, relative to the weight of the total block copolymer.

5. Solvent free, hot melt adhesive composition according to claim 1, wherein component (b) comprises hydrogenated rosin esters and preferably diglycerol esters or pentaerythritol esters of hydrogenated rosin, or hydrogenated hydrocarbon resin, and is present in a weight proportion of from 50 to 120 parts by weight resin per 100 parts by weight of block copolymer.

6. Solvent free, hot melt composition according to claim 1, wherein component (c) comprises an aromatic hydrocarbon resin.

7. Solvent free, hot melt adhesive compositions according to claim 6, wherein the component (c) include coumarone-indene resins, poly(alpha-methyl-styrene) resins, poly styrene resins or vinyl toluene-(alpha-methyl-styrene) copolymers,

8. Use of the solvent free, hot melt adhesive compositions according to claims 1-7, for bonding a polar leather layer to a non-polar substrate.

9. Use according to claim 8, comprising the bonding of polar leather shoe uppers and non-polar, polymeric material soles.

10. Use according to claim 9, comprising the bonding of polar leather shoe uppers to shoe soles (or midsoles) that are made from vinylarene/conjugated diene block copolymers; hydrogenated vinylarene/conjugated diene block copolymers; vinylarene/conjugated diene random copolymers; natural rubbers, poly(vinylarene); polyolefin; EVA copolymer; and/or mixtures thereof; to which optionally oils and other auxiliaries have been added.

11. Leather articles, composed of polar leather components and non-polar synthetic polymeric components, which have been bonded to each other by the solvent-free, hot melt adhesive compositions according to claims 1-7.

12. Process for bonding a polar leather layer to a non-polar synthetic polymeric layer, by the use of the solvent free, hot melt adhesive compositions according to claims 1-7.
